# EUROPEAN PATENT APPLICATION

(11) **EP 2 051 469 A1**
(43) Date of publication of application: **22.04.2009**
(21) Application number: 07020154.6
(22) Date of filing: 15.10.2007
(51) Int. Cl.: H04L 29/06, G06F 21/00

(54) **Delegation of authentication**

(71) Applicant: Axalto S.A., 92190 Meudon (FR)
(72) Inventor: Faher, Mourad, 92197 Meudon Cedex (FR); Dubois, Christophe, 92197 Meudon Cedex (FR)
(74) Representative: Wlodarczyk, Lukasz Georges Kazimierz

(57) **Abstract**

The invention relates to a method for a service provider server (SP) to delegate the authentication of an authentication token (ICC) to an identity provider server (IP). The authentication token (ICC) is attached to a personal computer (PC). The service provider server (SP), the identity provider server (IP), and the personal computer (PC) are connected together through a network. The delegation of authentication comprises the following steps:
• the identity provider server (IP) authenticates the authentication token (ICC),
• the identity provider server (IP) generates an artifact (A),
• the identity provider server (IP) sends the artifact (A) to the authentication token (ICC),
• the authentication token (ICC) sends the artifact (A) to the service provider server (SP),
• the artifact (A) received by the service provider server (SP) from the authentication token (ICC) is compared with the artifact (A) generated by the identity provider server (IP).

The invention also relate to a system implementing an authentication delegation method.

## Description

The invention relates to a method for delegating authentication, and to a system implementing delegation of authentication.

It also relates more specifically to protection against impersonation when using an authentication token for electronic services (e-Services). e-Services consist in delivering data from a service provider to the user of a personal computer, typically in the form of web pages. The data delivered to the user typically depends on the user's interactions with the service provider. The service provider is typically accessible to the user in the form of a web server. A service provider server may consist of a system comprising several servers. Authentication tokens include in particular smart cards, but also all sorts of portable tokens able to carry out authentication (USB tokens, etc.).

The deployment of smart card based electronic services often requires authentication of the cardholder through the cardholder's smart card. In case the e-service is provided by a service provider that is not enabled to authenticate the cardholder's smart card directly, the service provider can delegate the authentication to an identity provider. An identity provider typically consists of a server (or set of servers, referred to as server for the sake of simplicity), and are typically equipped with hardware security modules (HSM or SAM), which, as known by those skilled in the art, may host for example master keys from which the smart card keys can be derived for the purpose of authentication. The identity provider can perform a strong authentication of the remote smart card.

One problem with state of the art solutions is that they force the service provider server to implement certain security protocols and to include specific security hardware for securely storing critical key material associated with authentication tokens.
The solutions that have been devised so far include:
- the delivery of an authentication value to the service provider server through Key Transport protocol (described in EN 14890-1 clause 8.4) or equivalent cryptography based mechanism,
- authentication of the smart card by the service provider server based on a symmetric scheme (C.F. EN 14890-1 clause 8.8),
- privacy constrained device authentication with non traceability based on Elliptic Curve cryptography (CF. EN 14890-1 clause 8.6),
- authentication of the smart card with privacy protection (C.F. EN 14890-1 clause 8.5),
- authentication of the smart card based on Client/Server authentication mechanism (CF. EN 14890-2 clause 6)".

But all these mechanisms involve either the availability of a secure cryptographic key repository (for example a hardware security module HSM, or a security access module SAM) for keeping some key material associated with each smart card, or an interface to a PKI at Service Provider's level.

Certain solutions delegate the authentication to an identity provider server without using a secure cryptographic key repository (HSM, SAM etc.) at service provider level, but present a risk of security weakness, in particular when the identity provider server informs the service provider server of the successful authentication.

Other solutions (e.g. protocols like Kerberos) don't involve an authentication token and are therefore generally less portable and secure.

It is an object of the invention to provide a method and system in which the service provider server(s) is secure but simple.

The method according to claim 1 and the system according to claim 9 solve this problem by disclosing a service provider server which does not need to implement a hardware secure cryptographic key repository containing key material for each authentication token. In addition, the service provider server of claims 1 and 9 does not need to implement cryptographic features other than those already available in standard servers (such as SSL protocol support, which is natively available in state of the art servers).

This invention is therefore advantageous because it does not require performing any direct authentication of the cardholder nor to support the burden of a PKI infrastructure or of HSM at the service provider level.

This invention facilitates the deployment of e-services or web services and reduces the service provider server infrastructure costs.

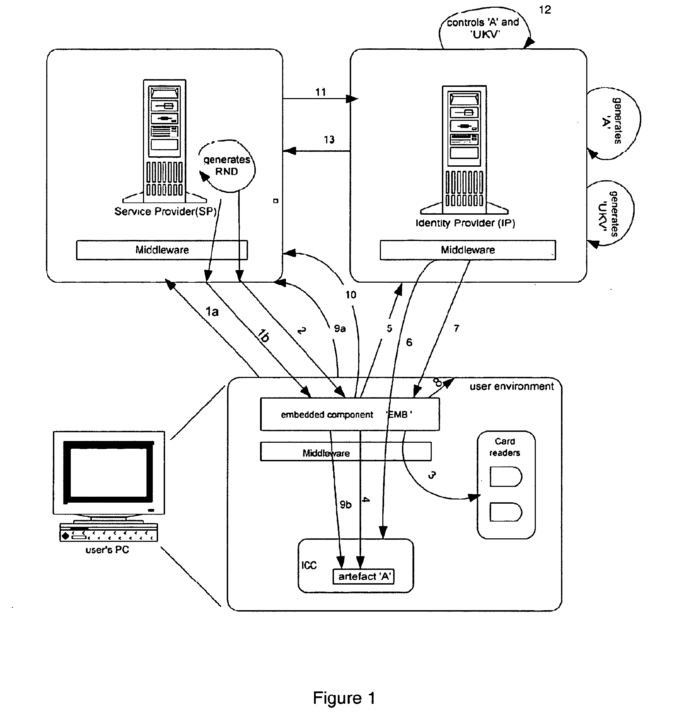

The invention and its advantages will be explained more in details in the following specification referring to the appended drawings, in which Figure 1 represents a system implementing a delegation of authentication according to the invention.

In a method for a service provider server SP to delegate the authentication of an authentication token ICC to an identity provider server IP according to a preferred embodiment of the invention,
- the authentication token ICC is attached to a personal computer PC; the attachment can be a physical connection (e.g. USB or serial electrical connection), but can be wireless as well (infra red, bluetooth, WiFi, RFID etc.),
- the service provider server SP, the identity provider server IP, and the personal computer PC are connected together through a network, which is typically the Internet, but could also be for example a dedicated network,
and the delegation of authentication comprises the following steps:
a. the identity provider server IP authenticates the authentication token ICC. This is achieved by conventional techniques, for example the authentication token may store an RSA private key and sign a challenge sent by the identity provider server. The authentication may also be based on symmetric cryptography, on one time passwords, or on other known techniques (biometrics with match-on-card, etc.). If the authentication fails, proper measures can be taken in accordance with known techniques, and subsequent steps are preferably not executed. The authentication by the identity provider server is preferably triggered by the service provider server, upon user request to obtain a service from the service provider server SP.
   The service provider server SP preferably redirects the user's request for a e-service to the identity provider server IP by an assertion for authentication (for example SAML-based).
b. the identity provider server IP generates an artifact A, the artifact A being for example a random number, such as an 8 bytes random. This artifact serves as an acknowledgement of authentication, and is normally known only by the identity provider server IP, the service provider server SP, and the authentication token ICC.
c. the identity provider server IP sends the artifact A to the authentication token ICC. This step is typically carried out through the personal computer PC acting as a kind of router between the identity provider server IP and the authentication token ICC. But it is also possible to have an authentication token with communication capabilities (e.g. GSM phone) which is able to communicate directly with the identity provider IP. The communication between the authentication token ICC and the identity provider server IP is preferably encrypted using key material agreed upon between them, which never needs to be sent in clear text outside the identity provider or the authentication token. An SSL or IPSEC connection between the authentication token and the identity provider is a possibility.
d. the authentication token ICC sends the artifact A to the service provider server SP. This step also typically takes place through the personal computer PC which retrieves the artifact A from the authentication token ICC and sends it to the service provider server SP, although direct communication with the service provider server SP is possible with certain authentication tokens ICC. The communication between the personal computer PC and the service provider server SP is preferably secured, for example by SSL.
e. the artifact A received by the service provider server SP from the authentication token ICC is compared with the artifact A generated by the identity provider server IP. If the comparison is successful, the service provider server can deliver the requested service to the user.

In preferred embodiments, steps a to c ocur only once per session. This means that a given artifact can be used several times during a session, which avoids carrying out several authentications involving the identity provider server. This can be used <hen multiple related servece providers are combinied together, each of which requiring authentication. After authentication by the identity provider to the first service provider, no more authentication is needed for the subsequent service provider in the current session.

The comparison according to step e can be carried out by the service provider server SP, which needs to request the original value of the artifact from the identity provider.

Alternatively, the comparison according to step e can be carried out by the identity provider server IP, to whom the service provider would send the artifact received from the identity provider.

It is assumed that securing the communication between the identity providers and the service providers is achieved with techniques known in the art. It is much easier to secure communication between trusted entities (such as identity providers and service providers) than between entities comprising personal computers which are a priori not trusted.

The delegation method may further comprise, after the identity provider server IP has authenticated the authentication token ICC, the following steps:
i. the identity provider server IP generates a temporary secret UKV, which is normally only known by the user of the computer PC, the identity provider server IP, the service provider server SP, and possibly the authentication token (see further explanations below).
ii. the identity provider server IP sends the temporary secret UKV to the personal computer PC, preferably through a secure connection such as SSL.
iii. the personal computer PC displays this temporary secret UKV on its screen in order that the user can memorize it or write it down, and deletes it afterwards in order to minimize the probability that a malware recover it in the future,
iv. the user of the personal computer PC types the temporary secret UKV, typically through the keyboard, but possibly by clicking elements on the screen or through other known techniques,
v. the personal computer PC transmits the temporary secret UKV typed by the user to the service provider server SP, preferably through a secure connection such as SSL,
vi. the temporary secret UKV received by the service provider server SP from the personal computer PC is compared with the temporary secret UKV generated by the identity provider server IP. Again, the comparison can be carried out by the service provider server SP or by the identity provider server IP.

In preferred embodiments, steps i to iii occur only once per session.

In preferred embodiments, the artifact A is not released until the temporary secret UKV has been validated. This makes attacks more complex. The service provider server SP does not implement end-to-end secure messaging with the authentication token ICC, therefore the artifact A is potentially exposed to a risk of disclosure to non authorized person, or could be tampered with while conveyed from the authentication token to the service provider server SP. The verification of the temporary secret UKV makes this type of attacks more complex.

In preferred embodiments, the service provider server SP is arranged to send a random number RND to the personal computer PC (preferably once per session, but possibly for each request), and step d comprises the following sub steps:
I. the personal computer PC obtains the artifact A from the authentication token ICC,
II. the personal computer PC combines the random number RND together with the artifact A. The combination can be a simple concatenation, an XOR operation between the artifact A and the random number RND, or any other operation which can be verified at the service provider side. Then the personal computer PC sends the combination to the service provider server SP,
III. before step e is carried out, the service provider server SP verifies that the combination received during sub step II matches the random number RND it sent initially. Therefore if the random number is incorrect the service provider server does not need to communicate with the identity provider server IP in order to check the artifact A.

The random number RND is a shared temporary secret normally known only by the service provider server SP and the personal computer PC (and preferably, the component EMB described below is the only component of the personal computer PC which stores this random number RND).

In preferred embodiments the use of the random number RND is combined with the use of a temporary secret UKV (i.e. the combination is not released until the temporary secret has been verified).

In preferred embodiments the service provider is arranged to install a software component EMB, for example an ActiveX control, in the personal computer PC. The software component EMB is responsible for receiving and storing the random number RND (which can be stored in the software component EMB itself) and for carrying out sub steps I and II.

In the detailed description of a practical example given below, the steps numbering refers to Figure 1:
1a. A cardholder requests a remote service from a Service Provider server SP from using his home PC's Internet browser.
   If the service provider server detects that an embedded ActiveX component EMB is registred and properly installed, go to step 2, otherwise the component EMB is downloaded and installed through an SSL session (step 1b).
2. the service provider server SP personalizes the existing component EMB with a random value RND.
3. the component EMB, through underlying middleware, retrieves a list of all existing card readers in the user's personal computer and presents the list to the user who should select which reader is to be used.
4. the ActiveX component EMB checks whether the card is inserted in the selected reader then tries to read the artifact A out of the card (this may be subject to timestamping of the artifact A, i.e. if the artifact is too old it would be discarded). Alternatively, the artifact reading attempt may be skipped, and each session may start necessarily from step 5, which increases the session security.
5. if no artifact A is found in the card (or if no attempt to check the presence of an existing artifact A has been carried out due for example to the security policy), the ActiveX component EMB sends an authentication message (e.g. XML file inside SOAP message) to an Identity Provider server IP through a TLS/SSL channel.
6. The Identity Provider server IP performs a strong authentication of the cardholder or/and the cardholder's card ICC, then establishes a secure channel with the card ICC and generates an artifact A (which is a sort of unique authentication acknowledgement) and a unique value UKV of which the identity provider server IP stores a copy respectively as Ac and UKVc along with the related assertion for authentication.
7. the information A is securely written through the secure channel onto ICC. The information UKV is conveyed through the secure channel between the identity provider server IP and the token ICC, then it is retrieved from the token ICC by the component EMB. Alternatively, UKV could be conveyed through a separate secure channel between the identity provider server IP and the component EMB, which is potentially less secure but often simpler.
8. The information UKV is then displayed as it is by the embedded component EMB. The user can use later on the user knowledge-based secret UKV to access an e-service.
9. If later on in the same session the user requests an e-service from the service provider server SP, the method may (if authorized by the security policy in place) start here since the initialization is done. The service provider server SP requires the user to input the information UKV which is conveyed through TLS/SSL session (9a). Then the component EMB reads the artifact A out of the ICC through the middleware (step 9b), the artifact A being preferably READ-protected by user's PIN code. The component EMB concatenates the artifact A with the random RND.
10. The component EMB sends the result of the concatenation to the service provider server SP through a SSL channel.
11. The service provider server SP verifies the validity of the random number RND. In case the random number RND is valid, the service provider server SP sends through a TLS/SSL channel a SAML status request to the identity provider server IP in order to verify the validity of the artifact A and of the information UKV. The SAML request contains the artifact A and the information UKV.
12. The identity provider IP controls whether a stored couple of values Ac and UKVc matches the couple of received values A and UKV.
13. If the values match, the identity provider IP returns a favorable SAML status response to the service provider SP, allowing it to offer the service to the user. Otherwise the service is denied.

The preferred embodiment illustrated on Figure 1 provides an easy verification method, no card-compliant authentication protocol has to be supported by the Service Provider server SP.

This method minimizes the risk of user impersonation in case of interception of the artifact A by an unintended recipient, and facilitates the deployment thereby broadening the card market for web applications.

The invention also relates to a system comprising a personal computer PC, a service provider server SP, an identity provider server IP, and an authentication token ICC. The personal computer PC, the service provider server SP and the identity provider server IP are set to be connected together through a network (e.g. Internet). The authentication token ICC is set to be attached to the personal computer PC. The service provider server SP is set to deliver data to the personal computer PC (e.g. web pages requested by a user of the personal computer PC). The service provider server SP is set to subject at least one of said data delivery (e.g. sensitive web pages such as healthcare records or bank accounts) to a successful authentication of the authentication token ICC. The service provider server SP is set to delegate the authentication of the authentication token ICC to the identity provider server IP. The delegation of authentication comprises:
a. the authentication of the authentication token ICC by the identity provider server IP,
b. the generation of an artifact A by the identity provider server IP,
c. sending the artifact A to the authentication token ICC,
d. sending the artifact A from the authentication token ICC to the service provider server SP.
e. comparing the artifact A received by the service provider server SP from the authentication token ICC with the artifact A generated by the identity provider server IP.

The variants and preferred embodiments of the method described earlier apply equally to the system.

## Claims

1. A method for a service provider server (SP) to delegate the authentication of an authentication token (ICC) to an identity provider server (IP), wherein the authentication token (ICC) is attached to a personal computer (PC), wherein the service provider server (SP), the identity provider server (IP), and the personal computer (PC) are connected together through a network, **characterized in** the delegation of authentication comprises the following steps:
a. the identity provider server (IP) authenticates the authentication token (ICC),
b. the identity provider server (IP) generates an artifact (A),
c. the identity provider server (IP) sends the artifact (A) to the authentication token (ICC),
d. the authentication token (ICC) sends the artifact (A) to the service provider server (SP),
e. the artifact (A) received by the service provider server (SP) from the authentication token (ICC) is compared with the artifact (A) generated by the identity provider server (IP).

2. The method according to claim 1, wherein steps a to c occur only once per session.

3. The method according to claim 1, wherein the comparison according to step e is carried out by the service provider server (SP).

4. The method according to claim 1, wherein the comparison according to step e is carried out by the identity provider server (IP).

5. The method according to claim 1, wherein the delegation further comprises, after the identity provider server (IP) has authenticated the authentication token (ICC), the following steps:
i. the identity provider server (IP) generates a temporary secret (UKV),
ii. the identity provider server (IP) sends the temporary secret (UKV) to the personal computer (PC),
iii. the personal computer (PC) displays this temporary secret (UKV) and deletes it,
iv. the user of the personal computer (PC) types the temporary secret (UKV),
v. the personal computer (PC) transmits the temporary secret (UKV) typed by the user to the service provider server (SP),
vi. the temporary secret (UKV) received by the service provider server (SP) from the personal computer (PC) is compared with the temporary secret (UKV) generated by the identity provider server (IP).

6. The method according to claim 5, wherein steps i to iii occur only once per session.

7. The method according to claim 1, wherein the service provider server (SP) is arranged to send a random number (RND) to the personal computer (PC), and wherein step d comprises the following sub steps:
I. the personal computer (PC) obtains the artifact (A) from the authentication token (ICC),
II. the personal computer (PC) combines the random number (RND) together with the artifact (A) and sends the combination to the service provider server (SP),
III. before step e is carried out, the service provider server (SP) verifies that the combination received during sub step II matches the random number (RND) it sent initially.

8. The method according to claim 7, wherein the service provider is arranged to install a software component (EMB) in the personal computer (PC), and wherein the software component (EMB) is responsible for receiving and storing the random number (RND) and for carrying out sub steps I and II.

9. A system comprising a personal computer (PC), a service provider server (SP), an identity provider server (IP), and an authentication token (ICC), wherein the personal computer (PC), the service provider server (SP) and the identity provider server (IP) are set to be connected together through a network, wherein the authentication token (ICC) is set to be attached to the personal computer (PC), wherein the service provider server (SP) is set to deliver data to the personal computer (PC), wherein the service provider server (SP) is set to subject at least one of said data delivery to a successful authentication of the authentication token (ICC), wherein the service provider server (SP) is set to delegate the authentication of the authentication token (ICC) to the identity provider server (IP), **characterized in** the delegation of authentication comprises:
a. the authentication of the authentication token (ICC) by the identity provider server (IP),
b. the generation of an artifact (A) by the identity provider server (IP)
c. sending the artifact (A) to the authentication token (ICC),
d. sending the artifact (A) from the authentication token (ICC) to the service provider server (SP),
e. comparing the artifact (A) received by the service provider server (SP) from the authentication token (ICC) with the artifact (A) generated by the identity provider server (IP).
